# EUROPÄISCHE PATENTSCHRIFT

(11) **EP 2 235 599 B1**
(45) Veröffentlichungstag und Bekanntmachung des Hinweises auf die Patenterteilung: **06.07.2011**
(21) Anmeldenummer: 08871172.6
(22) Anmeldetag: 13.11.2008
(51) Int. Cl.: G05D 23/19

(54) **VERFAHREN ZUM BETRIEB EINES STEUERGERÄTES FÜR WÄRMEEMPFINDLICHE AKTOREN**
METHOD FOR OPERATING A CONTROL UNIT FOR HEAT-SENSITIVE ACTUATORS
PROCÉDÉ PERMETTANT DE FAIRE FONCTIONNER UN APPAREIL DE COMMANDE POUR ACTIONNEURS THERMOSENSIBLES

(30) Priorität: 23.01.2008 DE 102008005645
(43) Veröffentlichungstag der Anmeldung: 06.10.2010
(73) Patentinhaber: Continental Teves AG & Co. OHG, 60488 Frankfurt (DE)
(72) Erfinder: MATTHIES, Thomas, 30655 Hannover (DE); KÖNIG, Oliver, 30171 Hannover (DE)
(86) Internationale Anmeldenummer: PCT/EP2008/065454
(87) Internationale Veröffentlichungsnummer: WO 2009/092469

(56) Entgegenhaltungen:
- DE-A1- 19 860 762
- DE-A1-102005 021 490
- US-A- 6 042 265

## Beschreibung

Die Erfindung betrifft ein Verfahren zum Betrieb eines Steuergerätes für wärmeempfindliche zeitweise betriebene Aktoren oder Einrichtungen, die innerhalb eines Systems von mehreren durch ein Steuergerät gesteuerten Aktoren oder Einrichtungen zusammenwirken, wobei für mindestens einen der Aktoren oder Einrichtungen zu jeder Zeit die thermische Belastung anhand eines Rechenmodells berechnet wird.

Innerhalb von Systemen mit wärmeempfindlichen Aktoren oder Einrichtungen, also beispielsweise innerhalb von Luftfedersystemen für Fahrzeuge, muss eine Überhitzung der Systemteile und -einrichtungen möglichst vermieden werden. Üblicherweise sind die zugehörigen und mit Hilfe zugeführter Energie betriebenen Aktoren und Einrichtungen, wie Kompressoren, Ventile, Motoren etc., nur für einen zeitlich begrenzten Betrieb ausgelegt, damit solche Systeme möglichst kostengünstig aufgebaut werden können. Ein Dauerbetrieb solcher Teile ist in der Regel nicht vorgesehen und würde zu einer erhöhten Wärmebelastung führen.

Durch Dauerbelastung oder bei zu schnell aufeinander folgendem Einschalten können in Abhängigkeit von der Umgebungssituation des jeweiligen Aktors oder der Einrichtung, dazu gehören z.B. die aktuelle Umgebungstemperatur, vorhandene Isolierungsmaterialien oder benachbarte Wärmequellen, insbesondere Motoren oder Kompressoren so stark überhitzt werden, dass es zu einer Funktionsstörung kommen kann.

Temperatursensoren an den entsprechenden Teilen könnten hier zwar Warnsignale erzeugen, sind aber aus Kostengründen in der Regel nicht bei allen Bauteilen vorhanden. Da die thermische Belastung eines Aktors (bzw. Einrichtung) üblicherweise eine Funktion der Laufzeit/Betriebszeit/Aktivierungszeit ist, wird im Stand der Technik die Laufzeit von einem Steuergerät gemessen und herangezogen um auf die thermische Belastung des Aktors (bzw. der Einrichtung) zu schließen. Diese Abhängigkeit/Funktion folgt einem Rechenmodell, welches auf jeden Aktor (bzw. Einrichtung) und die Umweltsituation des Aktors (bzw. der Einrichtung) zugeschnitten ist.

Wird der Aktor bzw. die Einrichtung aktiviert, erhöht sich zumeist die thermische Belastung des Aktors. Man spricht im Allgemeinen von der Aufheizphase des Aktors (bzw. der Einrichtung). Wird der Aktor nicht aktiviert, kühlt er sich zumeist ab und die thermische Belastung sinkt. Hier spricht man von der Abkühlphase des Aktors.

Nach einer bestimmten Aktivierungszeit ist der Aktor thermisch so belastet, dass er abgeschaltet wird und damit die Aufheizphase beendet ist. Die Länge der Aufheizphase kann je nach verwendetem Rechenmodell variieren. Das ist z.B. der Fall wenn in das Rechenmodell variable Größen wie die Umgebungstemperatur einfließen. Dementsprechend variabel kann sich die Deaktivierungszeit gestalten.

Beispielsweise liefert das Rechenmodell des Kompressors die aktuelle Kompressorkopf-Temperatur. Der Kompressorkopf ist die Stelle des Kompressors, die durch den Betrieb am stärksten belastet wird. Ist der Kompressor aktiviert, steigt die Kompressorkopf-Temperatur an. Letztere darf eine maximale Kompressorkopf-Temperatur (KKT-max) nicht überschreiten. Das Steuergerät beendet den Kompressorbetrieb, wenn die über das Rechenmodell berechnete Kompressorkopf-Temperatur die Schwelle "KKT-max" erreicht. Damit ist die Aufheizphase beendet und die Abkühlphase beginnt. Das Rechenmodell liefert in der Abkühlphase eine sinkende Kompressorkopf-Temperatur. Erreicht oder unterschreitet die Kompressorkopf-Temperatur eine untere Schwelle (minimale KKT, KKT-min), ist der Kompressor soweit abgekühlt, dass der Kompressor wieder aktiviert werden kann.

Bei der Auslegung der Schwelle ist oft ein Kompromiss erforderlich. Es ist einerseits zu berücksichtigen, dass der Kompressor dem System möglichst schnell wieder zur

Verfügung stehen und andererseits eine hinreichend lange thermische Belastbarkeit aufweisen soll.

Darüber hinaus ist nach dem Temperaturmodell jedem Aktor eine durch Versuche und unter Berücksichtigung der Einbausituation ermittelte erforderliche Abkühldauer Δt_{(T1→T0)} zugeordnet, während der der Aktor nach einer durch Betrieb erreichten Wärmebelastung wieder abkühlen muss, bevor er wieder eingeschaltet werden kann. Dabei ist T₁ die Temperatur, bei der der Aktor abgeschaltet werden muss, um Überhitzung zu vermeiden und T₀ die Schwelle, in diesem Falle eine Schwellentemperatur oder Normaltemperatur, die einen Weiterbetrieb innerhalb des Systems erlaubt.

Im Sinne eines optimierten Energiehaushaltes in einem System oder Fahrzeug werden üblicherweise alle Energieverbraucher eines Systems ausgeschaltet, wenn das gesamte System nicht mehr gebraucht wird. Dies führt bei den oben genannten Systemen mit Steuergeräten beispielsweise dazu, dass auch die Spannungsversorgung des Steuergerätes abgeschaltet wird. Danach arbeiten dessen Recheneinrichtungen nicht mehr und es gehen alle Informationen über den letzten aktuellen Betriebszustand des Systems verloren. Insbesondere gehen auch die Information darüber verloren, ob alle wärmeempfindlichen Aktoren oder Einrichtungen beim Ausschalten ihre notwendige Abkühlung bis unter eine Schwelle / Schwellentemperatur erreicht hatten bzw. ihre nötige Abkühlspanne durchlaufen haben, d.h. ob sie nach einer durch Betrieb erreichten Wärmebelastung wieder soweit abgekühlt sind, dass sie wieder eingeschaltet werden könnten und dem System eine hinreichende Zeit zur Verfügung stehen würden.

Ist eine ausreichende Abkühlung bis unter eine vorbestimmte Schwelle aber noch nicht erfolgt, z.B. eine ausreichende Abkühlung eines Luftfederkompressors bei einem Ausschalten und wieder Einschalten des Fahrzeugs bzw. des zugehörigen Luftfeder-Steuergerätes während einer Ampelphase, und würde der Kompressor trotz mangelnder Abkühlung wieder in Betrieb genommen, könnten Überhitzungen auftreten. Um das im Stand der Technik zu vermeiden, wird bei jedem neuen Einschalten des Steuergerätes üblicherweise angenommen, das die thermische Belastung von Aktoren und Einrichtungen maximal ist (worst case) und vor erneuter Inbetriebnahme erst die maximale Abkühldauer vergehen muss. Das führt nachteiligerweise dazu, dass nach Einschalten des Steuergerätes das System, respektive die Luftfederung, für einige Minuten nicht arbeitet.

Die US 6,042,265 offenbart ein Verfahren, bei dem die Temperatur eines auf dem Induktionsprinzip arbeitenden Elektromotors über die Messung den elektrischen Widerstand im Rotor bestimmt wird, wobei die Relation zwischen Temoperatur- und Widerstandsänderung bekannt sein muß. Die Problematik der Reduktion oder Optimierung von Einschaltzeit zu Ausschaltzeit ist hier jedoch nicht angesprochen.

Für die Erfindung bestand daher die Aufgabe, ein Verfahren zum Betrieb eines Steuergerätes für wärmeempfindliche zeitweise betriebene Aktoren oder Einrichtungen bereitzustellen, wobei das zum Steuergerät gehörige System aus Aktoren und Einrichtungen nach einem Ausschalten möglichst schnell wieder einsatzfähig ist, ohne das Erfordernis kostspieliger Zusatzeinrichtungen.

Gelöst wird diese Aufgabe durch die Merkmale des Hauptanspruchs. Weitere vorteilhafte Ausbildungen sind in den Unteransprüchen offenbart.

Dabei wird bei einem dem Steuergerät zugeleiteten Signal zur Abschaltung das Steuergerätes letzteres erst abgeschaltet, nachdem die anhand des Rechenmodells errechnete thermische Belastung des Aktors eine Schwelle erreicht bzw. unterschritten hat. Das Steuergerät wird also erst nach einer Nachlaufzeit Δt_{Nachlauf} abgeschaltet, wobei die Nachlaufzeit die Zeitdauer ist, welche angefangen vom Abschaltsignal bis zum Erreichen der unteren thermischen Belastungsschwelle des Aktors vergeht und sich indirekt über das Rechenmodell ergibt. Hierbei berechnet das Steuergerät mittels Rechenmodell die aktuelle thermische Belastung des Aktors. Hat die aktuelle thermische Belastung des Aktors die Abschaltschwelle erreicht, ist die Nachlaufzeit beendet und das Steuergerät wird spannungslos geschaltet.

Durch ein solches kontrolliertes Abkühlen der Aktoren/Einrichtungen können nach Abschalten und wieder Einschalten des Steuergerätes sofort alle Systemfunktionen ohne Wartezeit genutzt werden. Dies sorgt für eine wesentliche Erhöhung der Systembereitschaft.

Eine vorteilhafte Ausbildung des Verfahrens besteht in seiner Nutzung zum Betrieb eines Steuergerätes eines Luftfedersystems eines Fahrzeuges, wobei für einen im

Luftfedersystem vorhandenen Kompressor zu jeder Zeit die thermische Belastung anhand eines Rechenmodells berechnet wird und das Steuergeräte erst abgeschaltet wird, nachdem die, anhand des Rechenmodells errechnete, thermische Belastung des Kompressors eine Schwelle erreicht hat. Kompressoren und Ventile sind üblicherweise die durch Wärmeentwicklung meistbelasteten Bauteile, sodass hier eine besondere Effizienz des Verfahrens erreicht wird.

Damit ergibt sich eine weitere vorteilhafte Ausbildung des Verfahrens dadurch, dass zum Betrieb eines Steuergerätes eines Luftfedersystems eines Fahrzeuges für ein im Luftfedersystem vorhandenes Ventil zu jeder Zeit die thermische Belastung anhand eines Rechenmodells berechnet wird, wobei das Steuergerätes erst abgeschaltet wird, nachdem die anhand des Rechenmodells errechnete thermische Belastung des Ventils eine Schwelle erreicht hat.

Eine vorteilhafte Ausbildung des Verfahrens besteht darin, dass zu jeder Zeit die thermische Belastung über eine Temperatur anhand eines Temperaturmodells berechnet wird, wobei das Steuergerätes erst abgeschaltet wird, nachdem die anhand des Temperaturmodells errechnete Temperatur eine untere Grenztemperatur T₀ erreicht hat. Solche Temperaturmodelle sind durch entsprechende Versuchsreihen für einzelne Bauteile leicht zu bestimmen und in ihrem dann erforderlichen Rechenaufwand überschaubar.

Eine ebenso vorteilhafte wie einfache Ausbildung des Verfahrens besteht darin, dass zu jeder Zeit die thermische Belastung über eine Einschaltdauer berechnet wird, wobei das Steuergerät erst abgeschaltet wird, nachdem die Einschaltdauer einen unteren Grenzwert erreicht hat. Die Angabe der Einschaltdauer ist im Maschinenbau üblich und gehört bei vielen Aggregaten als Auslegungsgrundlage zur Dokumentation. Die Überprüfung von zeitlichen Abläufen ist durch Steuergeräte sehr genau und einfach durchzuführen.

Eine weitere vorteilhafte Ausbildung des Verfahrens besteht darin, dass für alle Aktoren oder wärmebelasteten Einrichtungen im Luftfedersystem zu jeder Zeit die thermische Belastung anhand eines Rechenmodells berechnet wird, wobei das Steuergerätes erst abgeschaltet wird, nachdem alle Aktoren oder Einrichtungen ihre Schwellen erreicht haben. Somit wird beispielsweise den Aktoren oder wärmebelasteten Einrichtungen im Luftfedersystem eine anhand eines Temperaturmodells erforderliche Abkühldauer Δt_{(T→T0)} zugeordnet, wobei das Steuergerätes erst nach der längsten der ermittelten Nachlaufzeiten abgeschaltet wird. Damit wird bei wesentlicher Erhöhung der Systembereitschaft die Absicherung gegen Überhitzung aller beteiligten Bauteile gewährleistet.

Eine vorteilhafte Ausbildung des Verfahrens besteht darin, dass bei einem dem Steuergerät zugeleiteten Signal zur Abschaltung des Steuergerätes der thermische Belastungszustand gespeichert wird, wonach nach erneuter Inbetriebnahme des Steuergerätes die thermische Belastung ausgehend vom abgespeicherten thermischen Belastungszustand berechnet wird

Damit verlegt man zwar prinzipiell die Abkühlung wieder auf die Zeit nach dem Einschalten, wie etwa beim Stand der Technik, man reduziert diese Abkühldauer jedoch durch Einberechnung der bereits vor Ausschalten erfolgten Abkühlung.

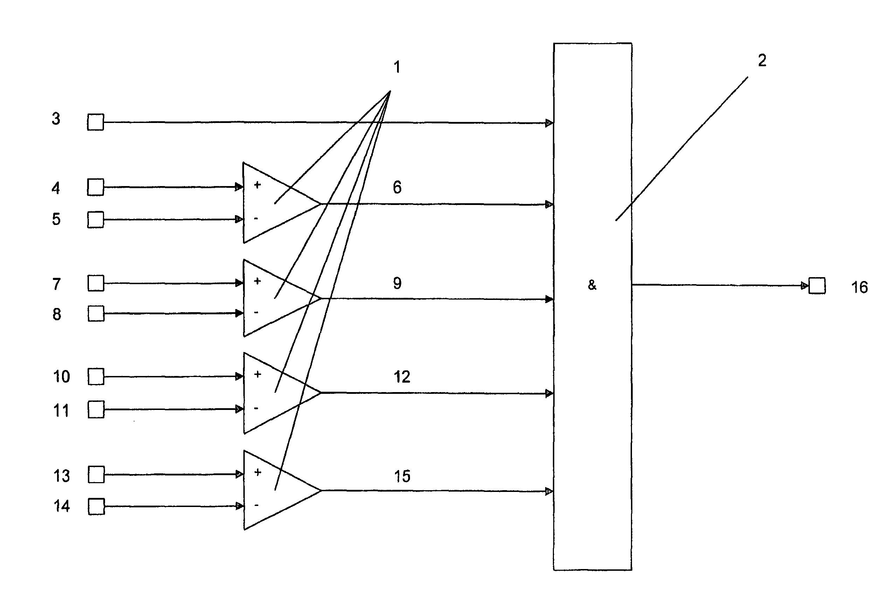

Die Fig. 1 zeigt hierzu ein Logikschaltbild, mit dem die Funktion des erfindungsgemäßen Verfahrens gemäß Anspruch 3 bei einer Niveauregelanlage verdeutlicht wird, also bei einem über ein Steuergerät geregelten Luftfedersystem eines Fahrzeugs.

Dabei wird von einem Zustand ausgegangen, bei dem der Kompressor im System bereits eine zeitlang in Betrieb ist und nach einem Temperaturmodell davon auszugehen ist, dass nun nach dieser Laufzeit der Kompressorkopf eine aktuelle Temperatur von 150° C (T_{K}) aufweist. Ein entsprechendes Signal 5 liegt an einem der in der Recheneinheit des Steuergerätes vorhandenen Komparatoren 1.

Der Fahrer schaltet zum Verlassen des Fahrzeuges die Zündung aus, wodurch ein Signal 3 zur Abschaltung des Steuergerätes an ein in der Recheneinheit des Steuergerätes vorhandenes UND-Gatter 2 gegeben wird. Ein Ausschalten des Steuergerätes erfolgt aber tatsächlich noch nicht.

An demselben in der Recheneinheit des Steuergerätes vorhandenen Komparator 1, an dem auch das Signal 5 anliegt, liegt auch die Schwellentemperatur des Kompressorkopfes von 40° C (Abschalttemperatur T₀) an. Sobald die aktuelle und anhand des Temperaturmodells für den Kompressor ermittelte Abkühldauer Δt_{(TK→T0)} für das Abkühlen der Temperatur des Kompressorkopfes ausreicht, um die Schwelle von T₀ = 40° C zu unterschreiten, geht ein entsprechendes Signal 6 an das UND-Gatter 2 im Steuergerät, dass, ausgehend allein von den Temperaturverhältnissen am Kompressorkopf, das Steuergerät nun ausgeschaltet werden könnte.

Gleichermaßen wird die jeweilige Abkühldauer Δt_{(TV→T0)} für das Abkühlen der Temperaturen von drei Ventilen überprüft. Dabei werden die jeweils anhand von entsprechenden Laufzeitmodellen ermittelten Schwellwerte für die Einschaltdauer, d.h. für das Erreichen einer der Schwelle für die Einschaltdauer entsprechenden Temperatur als Signale 7, 10 und 13 an die in der Recheneinheit des Steuergerätes vorhandenen Komparatoren 1 gegeben. Sobald die aus aktueller Einschaltdauer anhand des Temperaturmodells/Einschaltdauermodells für das jeweilige Ventil ermittelte und ebenfalls als Signal vorliegende Abkühldauer 8, 11 und 14 ausreicht, um die Normaltemperatur des jeweiligen Ventils zu unterschreiten, geht ein entsprechendes Signal 9, 12 und 15 an das UND-Gatter 2 im Steuergerät, dass, ausgehend von den Temperaturverhältnissen an dem jeweiligen Ventil, das Steuergerät für das Ausschalten freigegeben werden kann.

Erst wenn alle Signale 6, 9, 12 und 15 vorhanden sind, wird das Steuergerät mit dem Ausschaltsignal 16 tatsächlich ausgeschaltet.

### Bezugszeichenliste

- 1): Komparator
- 2): UND-Gatter
- 3): Signal zur Abschaltung des Steuergerätes
- 4): Signal (Temperaturschwellwert (Schwelle) Kompressorkopf)
- 5): Signal (aktuelle Temperatur Kompressorkopf
- 6): Signal (Normaltemperatur /Schwelle) erreicht / Kompressorkopf)
- 7): Signal (Einschaltdauer-Schwellwert erstes Ventil)
- 8): Signal (vorliegende Einschaltdauer erstes Ventil)
- 9): Signal (Schwelle Einschaltdauer erreicht / erstes Ventil)
- 10): Signal (Einschaltdauer-Schwellwert zweites Ventil)
- 11): Signal (vorliegende Einschaltdauer zweites Ventil)
- 12): Signal (Schwelle Einschaltdauer erreicht / zweites Ventil)
- 13): Signal (Einschaltdauer-Schwellwert drittes Ventil)
- 14): Signal (vorliegende Einschaltdauer drittes Ventil)
- 15): Signal (Schwelle Einschaltdauer erreicht / drittes Ventil)
- 16): Ausschaltsignal für das Steuergerät

## Patentansprüche

1. Verfahren zum Betrieb eines Steuergerätes für wärmeempfindliche zeitweise betriebene Aktoren oder Einrichtungen, die innerhalb eines Systems von mehreren durch das Steuergerät gesteuerten Aktoren zusammenwirken,
wobei für mindestens einen der Aktoren oder Einrichtungen zu jeder Zeit die thermische Belastung anhand eines Rechenmodells berechnet wird **dadurch gekennzeichnet, dass** bei einem dem Steuergerät zugeleiteten Signal zur Abschaltung des Steuergerätes letzteres erst abgeschaltet wird, nachdem die anhand des Rechenmodells errechneten thermische Belastung des Aktors eine Schwelle unterschritten hat.

2. Verfahren nach Anspruch 1 zum Betrieb eines Steuergerätes eines Luftfedersystems eines Fahrzeuges, **dadurch gekennzeichnet, dass** für einen im Luftfedersystem vorhandenen Kompressor zu jeder Zeit die thermische Belastung anhand eines Rechenmodells berechnet wird wobei das Steuergerät erst abgeschaltet wird, nachdem die anhand des Rechenmodells errechnete thermische Belastung des Kompressors eine Schwelle unterschritten hat.

3. Verfahren nach Anspruch 1 oder 2 zum Betrieb eines Steuergerätes eines Luftfedersystems eines Fahrzeuges, **dadurch gekennzeichnet, dass** für ein im Luftfedersystem vorhandenes Ventil zu jeder Zeit die thermische Belastung anhand eines Rechenmodells berechnet wird wobei das Steuergerät erst abgeschaltet wird, nachdem die anhand des Rechenmodells errechnete thermische Belastung des Ventils eine Schwelle unterschritten hat.

4. Verfahren nach Anspruch 2 oder 3, **dadurch gekennzeichnet, dass** zu jeder Zeit die thermische Belastung über eine Temperatur anhand eines Temperaturmodells berechnet wird, wobei das Steuergerät erst abgeschaltet wird, nachdem die anhand des Temperaturmodells errechneten Temperatur eine untere Grenztemperatur T₀ erreicht hat.

5. Verfahren nach Anspruch 1 bis 4, **dadurch gekennzeichnet, dass** für alle Aktoren oder wärmebelasteten Einrichtungen im Luftfedersystem zu jeder Zeit die thermische Belastung anhand eines Rechenmodells berechnet wird, wobei das Steuergerät erst abgeschaltet wird, nachdem alle Aktoren oder Einrichtungen ihre Schwellen erreicht haben.

## Claims

1. Method for operating a control unit for heat-sensitive, temporarily operated actuators or devices which interact within a system comprising a plurality of actuators which are controlled by the control unit, with the thermal loading for at least one of the actuators or devices being calculated on the basis of a computation model at any time, **characterized in that**, given a signal, which is supplied to the control unit, for switching off the control unit, said control unit is switched off only after the thermal loading on the actuator, which thermal loading is calculated on the basis of the computation model, has fallen below a threshold.

2. Method according to Claim 1 for operating a control unit of an air suspension system of a vehicle, **characterized in that** the thermal loading for a compressor which is present in the air suspension system is calculated on the basis of a computation model at any time, with the control unit being switched off only after the thermal loading on the compressor, which thermal loading is calculated on the basis of the computation model, has fallen below a threshold.

3. Method according to Claim 1 or 2 for operating a control unit of an air suspension system of a vehicle, **characterized in that** the thermal loading for a valve which is present in the air suspension system is calculated on the basis of a computation model at any time, with the control unit being switched off only after the thermal loading on the valve, which thermal loading is calculated on the basis of the computation model, has fallen below a threshold.

4. Method according to Claim 2 or 3, **characterized in that** the thermal loading is calculated on the basis of a temperature model using a temperature at any time, with the control unit being switched off only after the temperature, which is calculated on the basis of the temperature model, has reached a lower limit temperature T₀.

5. Method according to Claims 1 to 4, **characterized in that** the thermal loading for all the actuators or thermally loaded devices in the air suspension system is calculated on the basis of a computation model at any time, with the control unit being switched off only after all the actuators or devices have reached their thresholds.

## Revendications

1. Procédé de conduite d'un appareil de commande d'actionneurs ou de dispositifs sensibles à la chaleur qui sont actionnés de manière intermittente et qui coopèrent à l'intérieur d'un système constitué de plusieurs actionneurs commandés par l'appareil de commande,
la charge thermique d'au moins l'un des actionneurs ou dispositifs étant calculée à tout instant à l'aide d'un modèle de calcul,
**caractérisé en ce que**
lorsqu'un signal de débranchement de l'appareil de commande est apporté à l'appareil de commande, ce dernier n'est débranché qu'après que la charge thermique de l'actionneur, calculée à l'aide du modèle de calcul, n'atteint plus un seuil.

2. Procédé selon la revendication 1, pour la conduite d'un appareil de commande d'un système d'amortisseur pneumatique d'un véhicule, **caractérisé en ce que** la charge thermique d'un compresseur présent dans le système d'amortisseur pneumatique est calculée à tout instant à l'aide d'un modèle de calcul, l'appareil de commande n'étant débranché qu'après que la charge thermique du compresseur, calculée à l'aide du modèle de calcul, n'atteint plus un seuil.

3. Procédé selon les revendications 1 ou 2, pour la conduite d'un appareil de commande d'un système d'amortisseur pneumatique d'un véhicule, **caractérisé en ce que** la charge thermique d'une soupape présente dans le système d'amortisseur pneumatique est calculée à tout instant à l'aide d'un modèle de calcul, l'appareil de commande n'étant débranché qu'après que la charge thermique de la soupape, calculée à l'aide du modèle de calcul, n'atteint plus un seuil.

4. Procédé selon les revendications 2 ou 3, **caractérisé en ce que** la charge thermique est calculée à tout instant par l'intermédiaire d'une température et à l'aide d'un modèle de température, l'appareil de commande n'étant débranché qu'après que la température calculée à l'aide du modèle de température a atteint une température limite basse T₀.

5. Procédé selon les revendications 1 à 4, **caractérisé en ce que** la charge thermique de tous les actionneurs ou dispositifs sollicités thermiquement du système d'amortisseur pneumatique est calculée à tout instant à l'aide d'un modèle de calcul, l'appareil de commande n'étant débranché qu'après que tous les actionneurs ou dispositifs ont atteint leur seuil.
